# EUROPÄISCHE PATENTSCHRIFT

(11) **EP 2 108 475 B1**
(45) Veröffentlichungstag und Bekanntmachung des Hinweises auf die Patenterteilung: **19.05.2010**
(21) Anmeldenummer: 08405102.8
(22) Anmeldetag: 09.04.2008
(51) Int. Cl.: B23K 26/08, B23K 26/42

(54) **Vorrichtung und Verfahren zum automatischen Wechseln von Schneiddüsen**
Device and method for automatically exchanging cutting nozzles
Dispositif et procédé destinés au changement automatique d'ajutage de coupe

(43) Veröffentlichungstag der Anmeldung: 14.10.2009
(73) Patentinhaber: Bystronic Laser AG, 3362 Niederönz (CH)
(72) Erfinder: Plüss, Christoph, 3007 Bern (CH); Leist, Michael, 3325 Hettiswil (CH)
(74) Vertreter: EGLI-EUROPEAN PATENT ATTORNEYS

(56) Entgegenhaltungen:
- EP-A- 0 312 861
- EP-A- 1 602 438
- EP-A- 1 894 664
- EP-A- 1 894 665
- DE-C1- 10 056 330

## Beschreibung

Die vorliegende Erfindung betrifft eine Vorrichtung zum automatischen Wechseln von Schneiddüsen nach dem Oberbegriff des Anspruchs 1. Die Erfindung betrifft ferner ein Verfahren zum automatischen Wechseln von Schneiddüsen nach dem Oberbegriff des Anspruchs 12.

Abhängig von Blechstärke, Material und Schneidprozess (z B. Brenn-/Schmelzschneiden) müssen verschiedenartige Schneiddüsen in die Schneidköpfe der Schneidanlage eingesetzt werden. Diese Schneiddüsen werden im Stand der Technik vorwiegend manuell gewechselt bzw. eingeschraubt. Ein manueller Wechsel der Schneiddüsen ist jedoch mit einer relativ langen Unterbrechung des Betriebs der Schneidanlage verbunden.

Es sind jedoch auch Düsenwechselsysteme zum automatischen Wechseln von Schneiddüsen, insbesondere für Schneidköpfe einer Laserschneidanlage, bekannt. So zeigt die EP 1602438 A2 beispielsweise ein Düsenwechselsystem, bei dem der Schneidkopf während der Wechselphase an verschiedene Orte bewegt werden muss, um eine zu wechselnde Düse aus dem Schneidkopf zu entnehmen und eine neue Düse aus einem Düsenwechselmagazin aufzunehmen. Aus der JP 2006263765 ist ein Düsenwechselsystem bekannt, bei dem der Schneidkopf während der Düsenwechselphase in seiner Position verharrt und der eigentliche Düsenwechselvorgang von einem Roboterelement, insbesondere einem Roboterarm, vorgenommen wird. EP-A1-0 312 861 betrifft ein automatisches Wechseln von Schneiddüsen gemäß dem Oberbegriff der Ansprüche 1 und 12. Als insgesamt nachteilig an den bekannten Düsenwechselsystemen ist anzusehen, dass die aufwendigen und langen Wechselzeiten angestrebten Produktivitätssteigerungen im Wege stehen. Zudem sind die bekannten Systeme technisch sehr komplex und dadurch tendenziell störanfällig.

Als weiterer Nachteil ist die Tatsache zu nennen, dass gebrauchte, aus dem Schneidkopf entnommene Düsen bei bekannten Düsenwechselsystemen wieder in das Düsenwechselmagazin zurückbefördert werden und deshalb auf den Zustand der im nächsten Schritt zu entnehmenden Düse Rücksicht genommen werden muss, um nicht fälschlicherweise eine bereits gebrauchte Düse erneut in den Schneidkopf einzusetzen.

Aufwendige Systeme zur Prozesssicherheit bzw. Überprüfung der einzelnen Düsen sind die Folge.

Der Erfindung liegt daher die Aufgabe zugrunde, eine Vorrichtung bzw. ein Verfahren zum automatischen Wechseln von Schneiddüsen vorzuschlagen, mit der/dem die aus dem Stand der Technik bekannten Nachteile bei gleichzeitiger Produktivitätssteigerung umgangen werden können.

Die zuvor genannte Aufgabe wird durch eine Vorrichtung mit den Merkmalen des Anspruchs 1 und durch ein Verfahren mit Merkmalen des Anspruchs 12 gelöst.

Vorteilhafte Ausführungsformen der Erfindung sind Gegenstand der weiteren Ansprüche.

Ein Vorteil der erfindungsgemässen Vorrichtung besteht darin, dass das Düsenwechselmagazin und der Schneidkopf relativ zueinander bewegbar sind, dergestalt, dass das Düsenwechselmagazin während einer Düsenwechselphase in einer ersten Magazinstellung eine unmittelbare Entnahme und Entsorgung einer Schneiddüse aus dem Schneidkopf heraus und in einer zweiten Magazinstellung eine unmittelbare Aufnahme einer Schneiddüse in den Schneidkopf hinein, ermöglicht, wobei die X-Y-Koordinaten des Schneidkopfes, die zusammen mit der Z-Koordinate die Position des Schneidkopfes im Raum definieren, während der Düsenwechselphase im Wesentlichen konstant bleiben. Dies bedeutet, dass der Schneidkopf während der eigentlichen Düsenwechselphase, bezogen auf die X-Y-Koordinaten, nicht verfahren bzw. bewegt werden muss. Zur Erläuterung der X-Y-Z-Koordinaten sei angemerkt, dass im Wesentlichen Bewegungen in X-Y-Richtung horizontal verlaufende Bewegungsabläufe und Bewegungen in Z-Richtung vertikal verlaufende Bewegungsabläufe betreffen bzw. definieren sollen. Mit der Einsparung von Bewegungsabläufen beim Düsenwechsel tritt eine Zeitersparnis ein (denn Bewegung = Zeit), die eine signifikante Produktivitätssteigerung bewirkt. Ein weiterer Vorteil liegt darin, dass wenige Bewegungen des Schneidkopfes auch eine insgesamt einfachere Steuerung des Schneidkopfes ermöglichen. Der Schneidkopf muss zum Zwecke des Düsenwechsels also lediglich zu einer vorgegebenen Position (Wechselposition) verfahren werden und wird nach Erreichen der Wechselposition höchstens noch in Z-Richtung, also auf oder ab, bewegt. Alle anderen Bewegungen werden vom relativ zum Schneidkopf bewegbaren Düsenwechselmagazin ausgeführt. Bevorzugt ist das Düsenwechselmagazin daher mit einem eigenen Antrieb versehen. Das Düsenwechselmagazin kann somit grundsätzlich sowohl in vertikaler als auch horizontaler Ausrichtung verändert werden.

Die Auslösung für einen Schneiddüsenwechsel kann beispielsweise bedingt durch eine manuelle Aufforderung eines Bedieners oder bedingt durch eine automatische Aufforderung beispielsweise durch Ablauf eines Schneiddüsen-Standzeitzählers (Counter) erfolgen. Weitere Gründe für einen Schneiddüsenwechsel können durch ein neues zu bearbeitendes Material/Blech oder durch eine entsprechende Aufforderung im Schneidplan bedingt sein.

Eine Ausführungsform sieht vor, dass die Entsorgung der entnommenen Schneiddüse über ein am Düsenwechselmagazin vorgesehenes Entsorgungselement erfolgen kann. Bei dem Entsorgungselement kann es sich um ein grundsätzlich beliebiges Mittel handeln, welches eine Entsorgung einer benutzten Schneiddüse ermöglicht. Bevorzugt ist das Entsorgungselement jedoch als im Düsenwechselmagazin vorgesehene Entsorgungsöffnung, vorzugsweise Durchgangsbohrung, ausgebildet. Die zu entsorgende Schneiddüse kann somit aus dem Schneidkopf entfernt und über die Entsorgungsoffnung im Düsenwechselmagazin entsorgt werden.

Die hier beschriebene Funktionsweise des Düsenwechsels bzw. der Entsorgungsvorgang lässt sich am einfachsten mit einer grundsätzlich aus dem Stand der Technik bekannten Schneiddüsen-Steckkupplung (Schnellkupplung / Arretiervorrichtung) realisieren. Dabei kann der Schneidkopf ein gefedert gelagertes Düsenstocksystem aufweisen. Die Schneiddüse kann einen verlängerten Aufnahmehals mit einer Rastnute aufweisen, welche beim Einstecken in die Innengeometrie des Düsenstocks einrastet. Der im Düsenstock integrierte Rastmechanismus ist so ausgebildet, dass sich dieser beim Komprimieren eines äusseren Federgehäuses und einer Druckfeder löst, entsichert und die Rastnute geometrisch freigibt, so dass die Schneiddüse ausgewechselt werden kann. Beispielsweise kann vorgesehen sein, dass die Schnellkupplung mit dem Düsenwechselmagazin in Wirkverbindung steht, dergestalt, dass durch Anlage des Schneidkopfes am Düsenwechselmagazin, eine Betätigung der Schnellkupplung erfolgt. Das bedeutet, dass die Betätigung der Schnellkupplung im Wesentlichen vollautomatisch, ohne manuellen Eingriff eines Bedieners, erfolgt.

Eine weitere Ausführungsform sieht vor, dass im Bereich der Entsorgungsöffnung, bevorzugt unterhalb davon, ein Auffangelement, vorzugsweise ein Behälter und/oder eine Schublade oder dergleichen, angeordnet sein kann, in dem die entsorgte Schneiddüse aufgefangen wird. Somit kann sichergestellt werden, dass sich keine gebrauchten Schneiddüsen im Düsenwechselmagazin befinden. Die gebrauchten Schneiddüsen werden im Auffangelement gesammelt und es steht dem Bediener frei, diese nach Prüfung wieder im Magazin einzusetzen oder bei massiven Verschleisserscheinungen endgültig zu entsorgen.

Beispielsweise ist im Düsenwechselmagazin zumindest ein kreisförmiges, mit mehreren Haltebohrungen für die Aufnahme der Schneiddüsen versehenes, Magazinrad angeordnet, wobei mehrere Schneiddüsen in Umfangsrichtung an dem Magazinrad angeordnet sind. Wie viele Haltebohrungen in Umfangsrichtung an dem Magazinrad angeordnet sind, spielt erfindungsgemäss eine untergeordnete Rolle, richtet sich in erster Linie jedoch nach der Grösse des Magazinrades. Alle in diesem Text beschriebenen Verstellbewegungen des Düsenwechselmagazins betreffen im Umkehrschluss somit auch die Verstellbewegung des Magazinrades. In einer einfachsten Ausführungsform kann es sich beim Düsenwechselmagazin selber um zumindest ein Magazinrad handeln.

Um einen sicheren Sitz der Schneiddüsen am Magazinrad während der Verstellbewegung zu gewährleisten, kann vorgesehen sein, dass die Schneiddüsen mit einem Sicherungselement, beispielsweise einem O-Ring, gegen Herausfallen aus den Haltebohrungen gesichert sind.

Eine andere Ausführungsform sieht vor, dass mehrere Magazinräder nebeneinander angeordnet sein können, die gemeinsam ein Magazindepot bilden. Beispielsweise können dabei jedem Magazinrad Schneiddüsen des gleichen Typs zugewiesen sein, obwohl sich die Schneiddüsen grundsätzlich von Magazinrad zu Magazinrad unterscheiden können. Der im jeweiligen Magazinrad eingesetzte Schneiddüsentyp kann dann entsprechend der CNC-Steuerung zugewiesen werden, so dass beim automatischen Wechselvorgang das jeweilig gewünschte Magazinrad angefahren und der zugewiesene Schneiddüsentyp entnommen bzw. eingesetzt werden kann.

Beispielsweise ist das Magazinrad mit horizontaler Achse auf einer horizontal verlaufenden, drehbaren Antriebs- und/oder Trägerwelle angeordnet, wobei das Magazinrad mittels einer Klemm- und/oder Rastverbindung auf die Trägerwelle aufschiebbar bzw. befestigbar ist. Dies hat den Vorteil, dass das Magazinrad im Bedarfsfall einfach ersetzt bzw. ausgetauscht werden kann.

Beispielsweise kann die Antriebs- und/oder Trägerwelle und das Magazinrad zumindest eine Aufsteckfräsung aufweisen, wobei die Aufsteckfräsung an der Antriebs- und/oder Trägerwelle mit der im Magazinrad vorgesehenen Aufsteckfräsung korrespondiert. Dass heisst, dass an der Antriebs- und/oder Trägerwelle Führungsflächen oder dergleichen vorgesehen sein können, die einen sicheren Halt des Magazinrades auf der Antriebs- und/oder Trägerwelle bewirken und sicherstellen, dass das Magazinrad in korrekter Position auf der Antriebs- und/oder Trägerwelle zur Anlage kommt.

Ferner kann vorgesehen sein, dass die Antriebs- und/oder Trägerwelle zumindest eine Durchgangsbohrung aufweist, wobei die Durchgangsbohrung in ihrem Durchmesser im Wesentlichen dem Durchmesser der Entsorgungsöffnung im Magazinrad entspricht, und wobei die Durchgangsbohrung mit der Entsorgungsöffnung im Magazinrad fluchtet. Die korrekte Position des Magazinrades auf der Antriebs- und/oder Trägerwelle ist also gleichzeitig die Position, die gewährleistet, dass die Durchgangsbohrung in der Antriebs- und/oder Trägerwelle mit der Entsorgungsöffnung im Magazinrad fluchtet. Die zu entsorgende bzw. aus dem Schneidkopf zu entnehmende Schneiddüse kann nunmehr über die im Magazinrad vorgesehene Entsorgungsöffnung bzw. über die Durchgangsbohrung in der Antriebs- und/oder Trägerwelle entsorgt werden. Es versteht sich dabei von selbst, dass die Durchgangsbohrung und die Entsorgungsöffnung so ausgebildet sind, dass ein sicheres Entgleiten der Schneiddüse realisiert werden kann. Bevorzugt, jedoch keinesfalls zwingend, können Mittel, insbesondere Rastmittel oder dergleichen, vorgesehen sein, mit denen das Magazinrad an der Antriebs- und/oder Trägerwelle fixiert werden kann. Ferner ist denkbar, dass bei der Demontage eines Magazinrades von der Antriebs- und/oder Trägerwelle ein Hilfsmittel, beispielsweise in der Art eines Werkzeugschlüssels ausgebildet, zum Einsatz kommt, mit dem das Magazinrad unter leichten Drehbewegungen des Werkzeugschlüssels gegen die Antriebs- und/oder Trägerwelle von dieser abgehoben werden kann. Der Werkzeugschlüssel kann dabei durch die Entsorgungsöffnung im Magazinrad eingeführt und so in Kontakt mit der Antriebs- und/oder Trägerwelle gebracht werden.

Eine weitere Ausführungsform sieht vor, dass das Düsenwechselmagazin als Trägerbauteil, in der Art einer Schiene oder dergleichen ausgebildet sein kann, wobei im Trägerbauteil mehrere Haltebohrungen für die Aufnahme der Schneiddüsen und zumindest eine Entsorgungsöffnung für die Entsorgung der Schneiddüsen vorgesehen sein können.

Bevorzugt kann das Magazinrad und/oder das Trägerbauteil in Leichtbauweise, insbesondere aus einem Kunststoffmaterial (POM) oder Aluminium, gefertigt sein.

Ein Vorteil des erfindungsgemässen Verfahrens besteht darin, dass das Düsenwechselmagazin und der Schneidkopf relativ zueinander bewegt werden, dergestalt, dass das Düsenwechselmagazin während einer Düsenwechselphase in einer ersten Magazinstellung eine unmittelbare Entnahme und Entsorgung einer Schneiddüse aus dem Schneidkopf heraus und in einer zweiten Magazinstellung eine unmittelbare Aufnahme einer Schneiddüse in den Schneidkopf hinein, ermöglicht, wobei die X-Y-Koordinaten des Schneidkopfes, die zusammen mit der Z-Koordinate die Position des Schneidkopfes im Raum definieren, während der Düsenwechselphase im Wesentlichen konstant gehalten werden.

Dabei kann der Ablauf im Wesentlichen durch die folgenden Verfahrensschritte gekennzeichnet sein:
a.) Verfahren eines Schneidkopfes (2) zu dem Düsenwechselmagazin (1);
b.) Positionieren des Düsenwechselmagazins (1) in eine erste Magazinstellung;
c.) Verfahren des Schneidkopfes (2) und/oder des Düsenwechselmagazins (1) in eine vertikal zu der X-Y-Ebene verlaufenden Z-Richtung;
d.) Betätigen einer Arretiervorrichtung bei gleichzeitigem Abkoppeln/Entnehmen und Entsorgen einer benutzten Schneiddüse (S) aus dem Schneidkopf (2);
e.) Verfahren des Schneidkopfes (2) und/oder des Düsenwechselmagazins (1) in die Z-Richtung;
f.) Positionieren des Düsenwechselmagazins (1) in eine zweite Magazinstellung;
g.) Verfahren des Schneidkopfes (2) und/oder des Düsenwechselmagazins (1) in die Z-Richtung;
h.) Aufnehmen einer neuen Schneiddüse (S) durch den Schneidkopf (2);
i.) Fortsetzen des Schneidbetriebs.

Das Verfahren sieht ferner vor, dass die Entnahme bzw. Abkopplung der Schneiddüse aus dem Schneidkopf durch einen Schneidgasimpuls am Schneidkopf unterstützt werden kann. Damit kann zum einen sichergestellt werden, dass die Schneiddüse nach Betätigung der beispielsweise Schnellkupplung sicher aus dem Schneidkopf entfernt wird und zum anderen wird die zu entsorgende Schneiddüse mit dem nötigen Druck in die Entsorgungsöffnung befördert und gelangt somit zuverlässig in den vorgesehenen Auffangbehälter.

Grundsätzlich sei erwähnt, dass unter bestimmten Voraussetzungen auf das Vorsehen einer Entsorgungsöffnung verzichtet werden könnte. So wäre beispielsweise denkbar, die aus dem Schneidkopf zu entsorgende Schneiddüse unmittelbar einem Auffangbehälter oder dergleichen zukommen zu lassen.

Beispielsweise kann vorgesehen sein, dass das Düsenwechselmagazin nach jedem erfolgtem Düsenwechsel in eine Ausgangsstellung, also in eine Art Nullstellung, gebracht werden kann.

Ein Ausführungsbeispiel 1 der Erfindung wird im Folgenden anhand der Zeichnungen näher erläutert.

Es zeigen:
- Fig. 1: eine schematische Darstellung einer Laserschneidanlage mit einem in Wechselposition befindlichen Düsenwechselmagazin;
- Fig. 2: das Düsenwechselmagazin gem. Fig. 1 in vergrösserter Darstellung;
- Fig. 3: die teilweise Schnittdarstellung eines auf einer Antriebs und/oder Trägerwelle angeordnetem Magazinrad mit darin angeordnetem Werkzeugschlüssel;
- Fig. 4: eine weitere Ausführungsform eines Düsenwechselmagazins;
- Fig. 5: die Antriebs und/oder Trägerwelle in Einzelansicht;
- Fig. 6: die Draufsicht auf das Düsenwechselmagazin gemäss Fig. 4;
- Fig. 7: ein Ausschnitt einer Laserschneidanlage mit darin angeordnetem Düsenwechselmagazin;
- Fig. 8: die schematische Darstellung eines an einem Düsenwechselmagazin vorgesehenen Auffangbehälters;
- Fig. 9: das Ablaufschema zum automatischen Wechseln von Schneiddüsen in einer Laserschneidanlage.

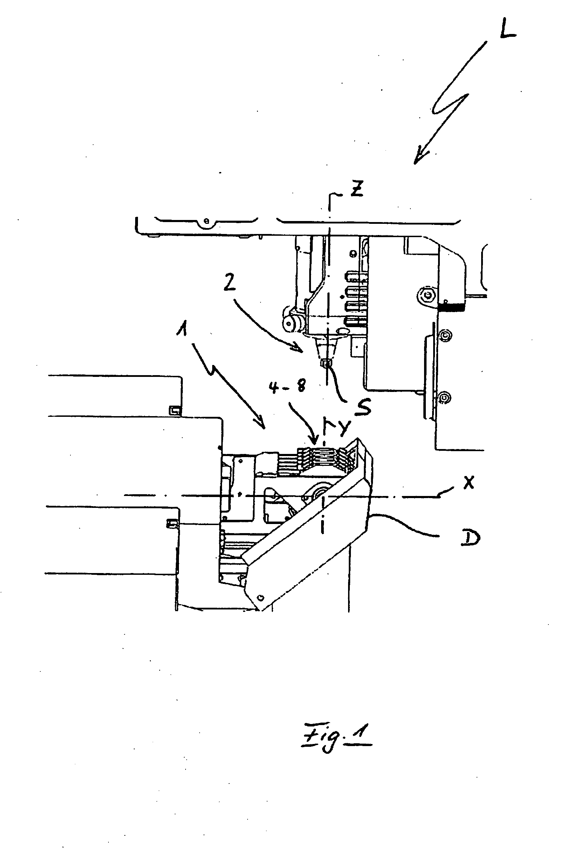

Fig. 1 zeigt eine schematische Darstellung einer Laserschneidanlage L zum automatischen Wechseln von Schneiddüsen mit einem in Wechselposition befindlichen Düsenwechselmagazin 1 erster Variante und mit einem Schneidkopf 2, der eine auswechselbar mit dem Schneidkopf 2 verbundene Schneiddüse S aufweist. Das Düsenwechselmagazin 1 erster Variante ist linear verfahrbar ausgebildet bzw. kann durch eine lineare Bewegung in seiner X-Richtung bewegt werden. Wird eine solche Bewegung des Düsenwechselmagazins 1 veranlasst, kann bedingt durch diese Bewegung, ein im vorderen Bereich des Düsenwechselmagazins 1 angeordneter Schutzdeckel D aufgeschoben werden, um den Zugriff auf die Magazinräder 4, 5, 6, 7, 8, die gemeinsam ein Magazindepot bilden, zu ermöglichen. Das Düsenwechselmagazin 1 kann somit im Wesentlichen linear von einer Ruhestellung in eine Arbeitsstellung (Wechselposition) bewegt werden. Die Betätigung des Schutzdeckels D (Öffnen oder Schliessen) kann an die Bewegung des Düsenwechselmagazins 1 gekoppelt sein oder separat erfolgen. Der Schneidkopf 2 ist zumindest in zwei Freiheitsgrade (X-Y-Ebene) verfahrbar und wurde zum Zwecke eines Schneiddüsenwechsels mittels einer Bewegungseinheit zu der Schneiddüsenwechselposition verfahren.

Grundsätzlich ist die hier beschriebene Laserschneidanlage L so konzipiert, dass möglichst viele Bewegungsabläufe mit der Laserschneidanlage L selber ausgeführt werden können (X/Y/Z). Das hier beschriebene Funktionsschema beschränkt sich daher während der Düsenwechselphase im Wesentlichen auf eine Drehbewegung des Düsenwechselmagazins 1 bzw. der Magazinräder 4, 5, 6, 7, 8.

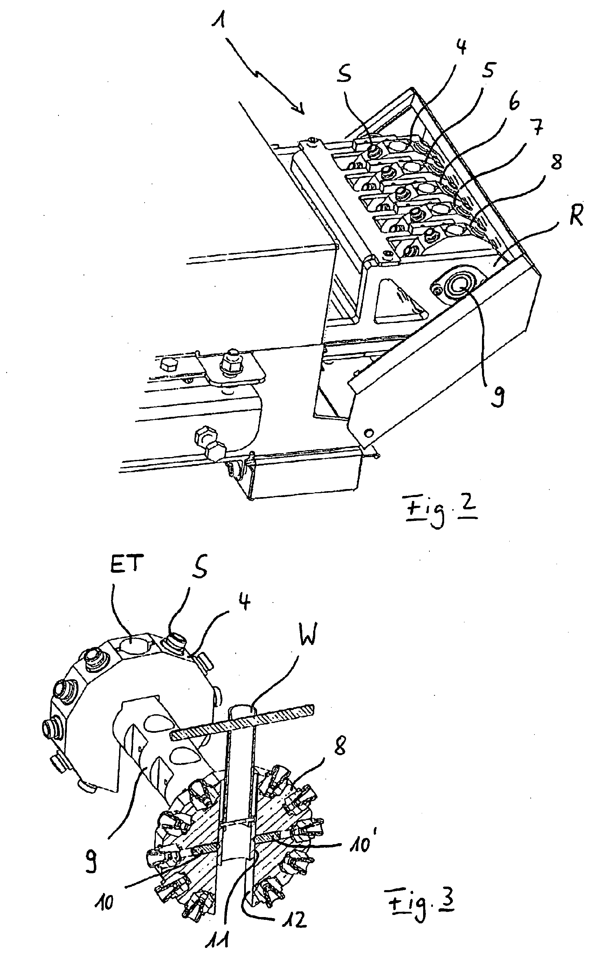

Fig. 2 zeigt das Düsenwechselmagazin 1 gem. Fig. 1 in vergrösserter Darstellung. Das Düsenwechselmagazin 1 weist eine Rahmenstruktur R auf, in der die Antriebsund/oder Trägerwelle 9 für die einzelnen Magazinräder 4, 5, 6, 7, 8 gelagert ist. Jedes Magazinrad 4, 5, 6, 7, 8 ist mit mehreren Haltebohrungen versehen, in denen die einzelnen Schneiddüsen S in Umfangsrichtung der Magazinräder 4, 5, 6, 7, 8 angeordnet sind. Die Schneiddüsen S (die Bezeichnung S gilt für alle sichtbaren Schneiddüsen) sind mit einem O-Ring (nicht dargestellt) gegen Herausfallen aus den Haltebohrungen gesichert.

Fig. 3 zeigt die teilweise Schnittdarstellung eines auf der Antriebs- und/oder Trägerwelle 9 angeordneten Magazinrads 8 mit darin angeordnetem Werkzeugschlüssel W. Ein hinteres Magazinrad 4 ist vollständig dargestellt und zeigt mehrere Schneiddüsen S, die in Umfangsrichtung auf dem Magazinrad 4 angeordnet sind. Die Magazinräder 4, 5, 6, 7, 8 (Magazinräder 5, 6, 7 hier nicht dargestellt) sind bei der hier gezeigten Ausführungsform, wie in der Schnittdarstellung des Magazinrades 8 zu erkennen, mit zwei Kugelrast-Bolzen 10, 10` versehen. Das Magazinrad 8 sowie die Antriebs und/oder Trägerwelle 9 weisen jeweils miteinander korrespondierende Aufsteckfräsungen (Führungsflächen) 11 und 12 auf, wobei die Kugelrast-Bolzen 10, 10` des Magazinrades 8 beim Aufstecken des Magazinrades 8 auf die Aufsteckfräsung 11 der Antriebs- und/oder Tragerwelle 9 einrasten. Zum Auswechseln des Magazinrades 8 kann mit Hilfe des Werkzeugschlüssels W das Magazinrad 8 aus den Rastpunkten P ausgehebelt werden (Einführen des Werkzeugschlüssels W bis auf die Antriebs- und/oder Trägerwelle 9, dann Werkzeugschlüssel W drehen, Magazinrad 8 wird aus Rastung gehoben). Ebenfalls gut zu erkennen ist die in den Magazinrädern 4, 5, 6, 7, 8 angeordnete Entsorgungsöffnung ET (die Bezeichnung ET gilt für alle sichtbaren Entsorgungsöffnungen), die zum einen als Entsorgungsöffnung für entnommene zu entsorgende Schneiddüsen und zum anderen als Einführöffnung für den Werkzeugschlüssel W dient.

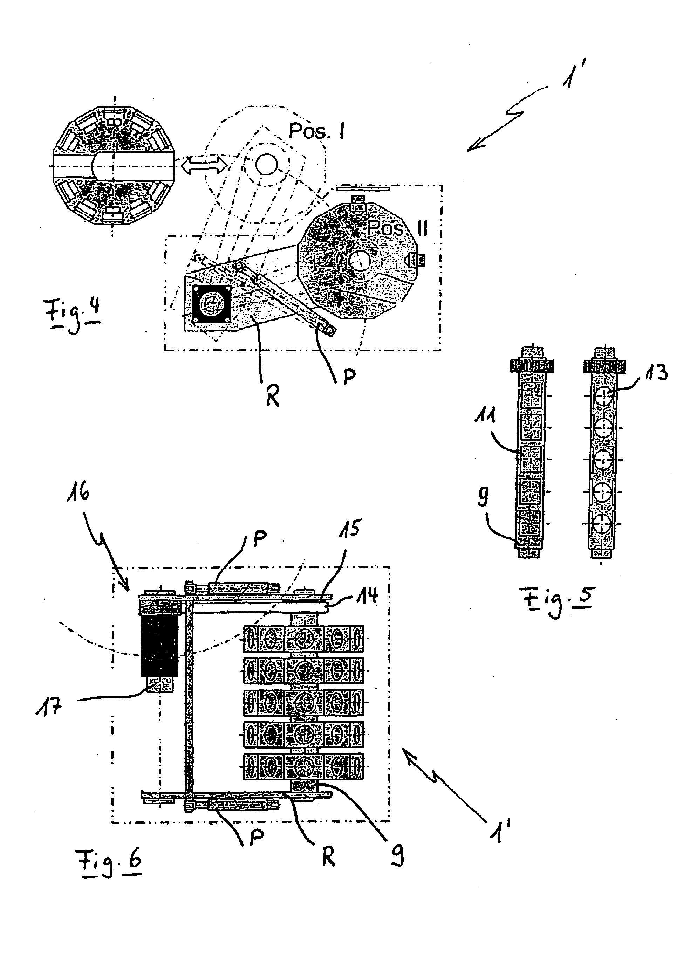

Fig. 4 zeigt eine schematisch dargestellte Rotationsbewegung eines Düsenwechselmagazins 1` zweiter Variante, welche Rotationsbewegung dazu dient, die jeweiligen Magazinräder in eine Austausch-/Entnahmeposition zu bringen. Das Düsenwechselmagazin 1` kann, wie dargestellt, eine Schwenkbewegung ausführen. Die Rahmenstruktur R kann beispielsweise mit Hilfe eines Pneumatikzylinders P von der Normalposition (POS. II) in eine Austausch-/ Entnahmeposition (POS. I) gebracht werden, um einen optimalen Zugang zur Entnahme eines Magazinrades zu gewährleisten.

Fig. 5 zeigt die Antriebs- und/oder Trägerwelle 9 in jeweils einer Drauf- und Seitenansicht. Gut zu erkennen sind die Aufsteckfräsungen (Führungsflächen) 11 (die Bezeichnung 11 gilt für alle sichtbaren Aufsteckfräsungen), wobei jedem Magazinrad eine Aufsteckfräsung 11 zugeordnet ist. In der Seitenansicht der Antriebs- und/oder Trägerwelle 9 ist ebenfalls gut die Durchgangsbohrung 13 (die Bezeichnung 13 gilt für alle sichtbaren Durchgangsbohrungen) zu erkennen. Die Durchgangsbohrung 13 entspricht in ihrem Durchmesser im Wesentlichen dem Durchmesser der Entsorgungsöffnung ET im Magazinrad, wobei die Durchgangsbohrung 13 mit der Entsorgungsöffnung ET im Magazinrad fluchtet. Diese fluchtende Anordnung wird mittels der Aufsteckfräsungen 11 erzielt, die sicherstellen, dass sich das Magazinrad in einer definierten Lage auf der Antriebs- und/oder Trägerwelle 9 befindet.

Fig. 6 zeigt die Draufsicht auf das Düsenwechselmagazin 1` zweiter Variante gemäss Fig. 4 mit den Magazinrädern 4, 5, 6, 7, 8. Die Antriebs- und/oder Trägerwelle 9 ist mittels Lagerstellen in der Rahmenstruktur R gelagert. Die Rahmenstruktur R selber ist schwenkbar auf einer Art Grundplatte (nicht dargestellt) befestigt. Die Rahmenstruktur R kann über Pneumatikzylinder P verschwenkt werden. Der/die Antrieb/Rotation der Magazinräder 4, 5, 6, 7, 8, kann beispielsweise über einen Zahnriemenantrieb 14 sichergestellt werden. Dazu ist auf der Antriebs-und/oder Trägerwelle 9 eine Riemenscheibe 15 befestigt und mit einer Antriebsscheibe 16 eines Motors 17 über den Zahnriemen 14 verbunden. Die Drehbewegung kann mittels eines rotativen Drehgebersystems am Motor gesteuert werden, wodurch eine genaue Winkelpositionierung der Magazinräder 4, 5, 6, 7, 8 gewährleistet werden kann.

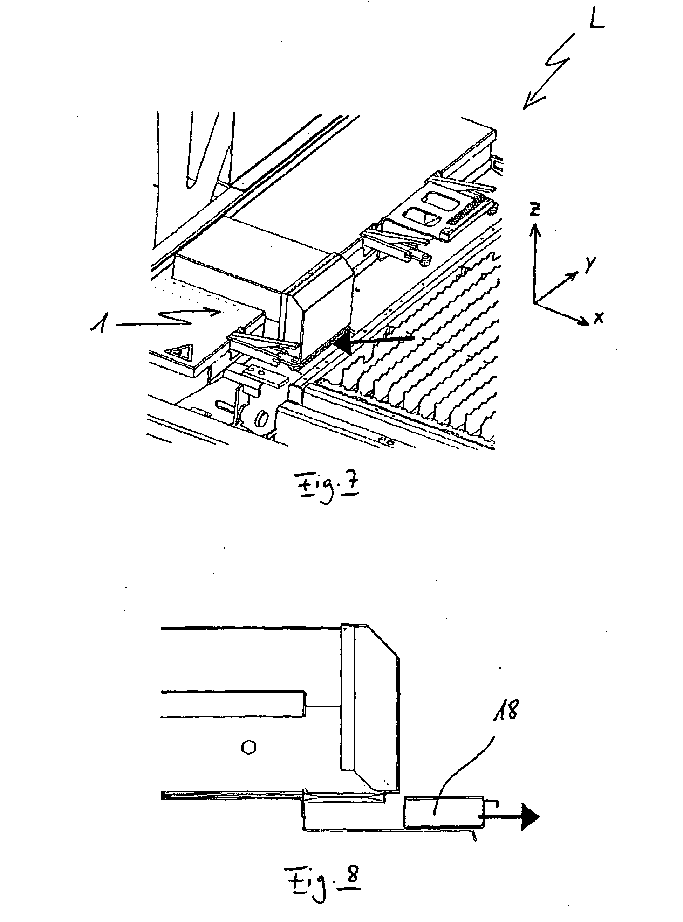

Fig. 7 zeigt einen Ausschnitt einer Laserschneidanlage L mit darin angeordnetem Düsenwechselmagazin 1. Der Schutzdeckel D ist verschlossen (Ruhestellung) und das Düsenwechselmagazin somit im Schneidbetrieb gegen das Eindringen von Schneidstaub oder dergleichen geschützt. Für den Düsenwechselvorgang kann das Düsenwechselmagazin 1 eine Linearbewegung ausüben, wodurch der Schutzdeckel D aufgeschoben wird. Das Düsenwechselmagazin verfährt somit in seine Wechselposition (Arbeitsstellung).

Fig. 8 zeigt die schematische Darstellung eines an einem Düsenwechselmagazins 1 vorgesehenen Auffangelements 18. Das Auffangelement 18 ist hier als Schublade ausgebildet und ermöglicht einem Bediener im ausgeschobenen Zustand die Entnahme von ausgeworfenen bzw. entsorgten Schneiddüsen.

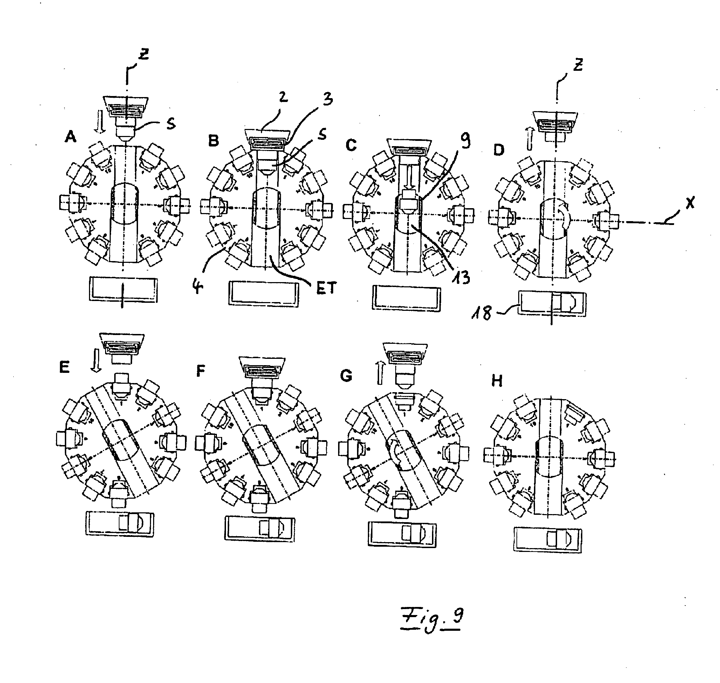

Fig. 9 zeigt das schrittweise Ablaufschema (A-H) zum automatischen Wechseln von Schneiddüsen S in einer Laserschneidanlage. Die Antriebs- und/oder Trägerwelle 9 mit dem aufgesteckten Magazinrad 4 ist in einer Standby-Stellung (Ruhestellung) des Düsenwechselmagazins immer so positioniert, dass die zentrale Entsorgungsöffnung ET des Magazinrades 4 bzw. die Durchgangsbohrungen 13 der Antriebs- und/oder Trägerwelle 9 vertikal stehen. Somit befindet sich das Düsenwechselmagazin immer in Abstreifposition (Wechselposition) gem. Stellung A.

Der Düsenwechsel kann dabei beispielsweise durch eine der folgenden Auslösesituationen ausgelöst werden:
1. laut Schneidplan wird ein anderer Typ Schneiddüse benötigt;
2. die in der Steuerung hinterlegte Standzeit der Schneiddüse ist verstrichen;
3. der Wechselvorgang wird vom Bediener ausgelöst.

Grundsätzlich befindet sich das Düsenwechselmagazin während der Bearbeitungsphase der Laserschneidanlage in einer Art Parkposition, dass heisst in einem geschützten Bereich fern des Schneidbereichs.

Wird ein Düsenwechsel ausgelöst, fährt eine Bewegungseinheit den Schneidkopf 2 in eine vorgegebene X/Y-Position (Wechselposition) zu dem entsprechenden Magazinrad 4. Nach Erreichen der Wechselposition erfolgt eine Verstellung des Schneidkopfes 2 nur noch in Z-Richtung (vertikale Ausrichtung), wobei der Schneidkopf 2 die Schneiddüse S in Z-Achse in die entsprechende Entsorgungsöffnung ET (siehe Stellung B) verfährt. Das äussere Federgehäuse einer am Schneidkopf 2 angeordneten Schnellkupplung 3 fährt auf die Schulter des Magazinrades 4 und das weitere Abtauchen in Z-Richtung, auf einen beispielsweise festgelegten "Disconnect-Wert", komprimiert die Schnellkupplung 3 gem. Stellung C. Der Rastmechanismus der Schnellkupplung 3 ist entsichert und die Schneiddüse S wird durch einen Schneidgasimpuls aus dem entsicherten Düsenstock ausgeblasen. Durch die Entsorgungsöffnung ET im Magazinrad 4 bzw. die Durchgangsbohrung 13 in der Antriebs- und/oder Trägerwelle 9 gelangt die zu entsorgende Schneiddüse S in das unterhalb des Magazinrades 4 angeordnete Auffangelement 18.

Im nachfolgenden Schritt, gem. Stellung D, hebt der Schneidkopf 2 wieder in Z-Richtung an und das Magazinrad 4 wird in die nächste Wechselstellung (Aufnahme einer neuen Schneiddüse) gedreht. Im Bereich der Magazinräder kann eine Vorrichtung zur Detektion von Schneiddüsen vorgesehen sein, mit der überprüft werden kann, ob in der neuen Magazinstellung eine Schneiddüse S vorhanden ist. Die Vorrichtung zur Detektion der Schneiddüsen, kann dabei beispielsweise als optische Lichtschranke, induktiver oder kapazitiver Näherungsschalter oder als magnetisch oder elektrisch arbeitendes Detektorsystem ausgebildet sein, um nur eine kleine Auswahl zu nennen. Falls keine Schneiddüse detektiert wird, wird das Magazinrad 4 in die nächste Stellung gedreht, bis eine Schneiddüse detektiert wird. Anschliessend taucht der Schneidkopf 2 gem. Stellung E wieder auf einen hinterlegten "Connect-Wert" ab und koppelt gem. Stellung F die neue Schneiddüse an. Danach hebt der Schneidkopf 2 gem. Stellung G in Z-Richtung an und der Schneidbetrieb kann fortgesetzt werden. Das Düsenwechselmagazin bzw. das Magazinrad 4 dreht folglich wieder in die Ausgangsstellung gem. Stellung H (entspricht im Wesentlichen Stellung A), so dass der Düsenwechselvorgang im Bedarfsfall von neuem gestartet werden kann.

## Patentansprüche

1. Vorrichtung zum automatischen Wechseln von Schneiddüsen (S), insbesondere für Schneidköpfe einer Laserschneidanlage, mit zumindest einem Schneidkopf (2), der eine auswechselbar mit dem Schneidkopf (2) verbundene Schneiddüse (S) aufweist, wobei der Schneidkopf (2) in einer durch eine X- und eine Y-Richtung definierten X-Y-Ebene verfahrbar ist, und wobei der Schneidkopf (2) vor dem Schneiddüsenwechsel mittels einer Bewegungseinheit zu einem relativ zum Schneidkopf (2) angeordneten Düsenwechselmagazin (1) verfahrbar ist, wobei im Düsenwechselmagazin (1) zumindest eine Schneiddüse (S) angeordnet ist, **dadurch gekennzeichnet, dass** das Düsenwechselmagazin (1) in einer ersten Magazinstellung eine unmittelbare Entnahme und Entsorgung einer Schneiddüse (S) aus dem Schneidkopf (2) heraus und in einer zweiten Magazinstellung eine unmittelbare Aufnahme einer Schneiddüse (S) in den Schneidkopf (2) hinein ermöglicht, und das Düsenwechselmagazin (1) um eine parallel zu der X-Y-Ebene verlaufende Richtung drehbar gelagert ist, wobei der Schneidkopf (2) während einer Düsenwechselphase in einer X-Y-Position konstant haltbar und zum unmittelbaren Entnehmen und/oder Aufnehmen der Schneiddüse (S) in einer vertikal zu dieser X-Y-Ebene verlaufenden Z-Richtung verstellbar ist.

2. Vorrichtung nach Anspruch 1, **dadurch gekennzeichnet, dass** die Entsorgung der entnommenen Schneiddüse (S) über ein am Düsenwechselmagazin (1) vorgesehenes Entsorgungselement erfolgt.

3. Vorrichtung nach einem der Ansprüche 1 oder 2, **dadurch gekennzeichnet, dass** das Entsorgungselement als im Düsenwechselmagazin (1) vorgesehene Entsorgungsöffnung (ET), vorzugsweise Durchgangsbohrung, ausgebildet ist.

4. Vorrichtung nach einem der Ansprüche 1 bis 3, **dadurch gekennzeichnet, dass** das Düsenwechselmagazin (1) zumindest ein kreisförmiges, mit mehreren Haltebohrungen für die Aufnahme der Schneiddüsen (S) versehenes, Magazinrad (4, 5, 6, 7, 8) aufweist, wobei mehrere Schneiddüsen (S) in Umfangsrichtung am Magazinrad (4, 5, 6, 7, 8) angeordnet sind.

5. Vorrichtung nach einem der Ansprüche 1 bis 4, **dadurch gekennzeichnet, dass** mehrere Magazinräder (4, 5, 6, 7, 8) nebeneinander angeordnet sind, die gemeinsam ein Magazindepot bilden.

6. Vorrichtung nach einem der Ansprüche 1 bis 5, **dadurch gekennzeichnet, dass** die Schneiddüsen (S) mit einem Sicherungselement, beispielsweise einem O-Ring, gegen Herausfallen aus den Haltebohrungen gesichert sind.

7. Vorrichtung nach einem der Ansprüche 1 bis 6, **dadurch gekennzeichnet, dass** das Magazinrad (4, 5, 6, 7, 8) auf einer drehbaren Antriebs- und/oder Trägerwelle (9) angeordnet ist, wobei das Magazinrad (4, 5, 6, 7, 8) mittels einer Klemm- und/oder Rastverbindung auf die Antriebs- und/oder Trägerwelle (9) aufschiebbar bzw. befestigbar ist.

8. Vorrichtung nach Anspruch 7, **dadurch gekennzeichnet, dass** die Antriebs- und/oder Trägerwelle (9) und das Magazinrad (4, 5, 6, 7, 8) zumindest eine Aufsteckfräsung (11, 12) aufweisen, wobei die Aufsteckfräsung (11) an der Antriebs- und/oder Trägerwelle mit der im Magazinrad (4, 5, 6, 7, 8) vorgesehenen Aufsteckfräsung (12) korrespondiert.

9. Vorrichtung nach einem der Ansprüche 7 oder 8, **dadurch gekennzeichnet, dass** die Antriebs- und/oder Trägerwelle (9) zumindest eine Durchgangsbohrung (13) aufweist, wobei die Durchgangsbohrung (13) in ihrem Durchmesser im Wesentlichen dem Durchmesser der Entsorgungsöffnung (ET) im Magazinrad (4, 5, 6, 7, 8) entspricht, und wobei die Durchgangsbohrung (13) mit der Entsorgungsöffnung (ET) im Magazinrad (4, 5, 6, 7, 8) fluchtet.

10. Vorrichtung nach einem der Ansprüche 1 bis 9, **dadurch gekennzeichnet, dass** im Bereich der Entsorgungsöffnung (ET), bevorzugt unterhalb davon, ein Auffangelement (18), vorzugsweise ein Behälter und/oder eine Schublade oder dergleichen, angeordnet ist, in dem die entsorgte Schneiddüse (S) aufgefangen wird.

11. Vorrichtung nach 1, **dadurch gekennzeichnet, dass** das Düsenwechselmagazin als Trägerbauteil, in der Art einer Schiene oder dergleichen ausgebildet ist, wobei im Trägerbauteil mehrere Haltebohrungen für die Aufnahme der Schneiddüsen und zumindest eine Entsorgungsöffnung für die Entsorgung der Schneiddüsen vorgesehen sind.

12. Verfahren zum automatischen Wechseln von Schneiddüsen, mittels einer Vorrichtung nach einem der Ansprüche 1 bis 11, mit zumindest einem Schneidkopf (2), der eine auswechselbar mit dem Schneidkopf (2) verbundene Schneiddüse (S) aufweist, wobei der Schneidkopf (2) in einer durch eine X- und eine Y-Richtung definierten X-Y-Ebene verfahrbar ist, und wobei der Schneidkopf (2) vor dem Schneiddüsenwechsel mittels einer Bewegungseinheit zu einem relativ zum Schneidkopf (2) angeordneten Düsenwechselmagazin (1) verfahren wird, wobei im Düsenwechselmagazin (1) zumindest eine Schneiddüse (S) bereitgestellt wird, **dadurch gekennzeichnet, dass** das Düsenwechselmagazin (1) und der Schneidkopf (2) relativ zueinander bewegt werden, dergestalt, dass das Düsenwechselmagazin (1), während einer Düsenwechselphase in einer ersten Magazinstellung eine unmittelbare Entnahme und Entsorgung einer Schneiddüse (S) aus dem Schneidkopf (2) heraus und in einer zweiten Magazinstellung eine unmittelbare Aufnahme einer Schneiddüse (S) in den Schneidkopf (2) hinein ermöglicht, wobei die X-Y-Position des Schneidkopfes (2) während der Düsenwechselphase konstant gehalten wird.

13. Verfahren zum automatischen Wechseln von Schneiddüsen nach Anspruch 12, **gekennzeichnet durch** die folgenden Schritte:
a.) Verfahren eines Schneidkopfes (2) zu dem Düsenwechselmagazin (1);
b.) Positionieren des Düsenwechselmagazins (1) in eine erste Magazinstellung;
c.) Verfahren des Schneidkopfes (2) und/oder des Düsenwechselmagazins (1) in eine vertikal zu der X-Y-Ebene verlaufenden Z-Richtung;
d.) Betätigen einer Arretiervorrichtung bei gleichzeitigem Abkoppeln/Entnehmen und Entsorgen einer benutzten Schneiddüse (S) aus dem Schneidkopf (2);
e.) Verfahren des Schneidkopfes (2) und/oder des Düsenwechselmagazins (1) in die Z-Richtung;
f.) Positionieren des Düsenwechselmagazins (1) in eine zweite Magazinstellung;
g.) Verfahren des Schneidkopfes (2) und/oder des Düsenwechselmagazins (1) in die Z-Richtung;
h.) Aufnehmen einer neuen Schneiddüse (S) **durch** den Schneidkopf (2);
i.) Fortsetzen des Schneidbetriebs.

14. Verfahren nach einem der Ansprüche 12 oder 13, **dadurch gekennzeichnet, dass** die Entnahme bzw. Abkopplung der Schneiddüse (S) aus dem Schneidkopf (2) durch einen Schneidgasimpuls am Schneidkopf (2) unterstützt wird.

15. Verfahren nach einem der Ansprüche 12 bis 14, **dadurch gekennzeichnet, dass** am Schneidkopf (2) eine Arretiervorrichtung, vorzugsweise eine Schnellkupplung bereitgestellt wird, wobei das Lösen und Befestigen der Schneiddüse (S) am Schneidkopf (2) durch Betätigen der Arretiervorrichtung erfolgt.

16. Verfahren zum automatischen Wechseln von Schneiddüsen nach einem der Ansprüche 12 bis 15, **dadurch gekennzeichnet, dass** das Düsenwechselmagazin (1) nach jedem erfolgtem Düsenwechsel in eine Ausgangsstellung gebracht wird.

## Claims

1. A device for automatically changing cutting nozzles (S), particularly for cutting heads on a laser cutting machine, with at least one cutting head (2), which has a cutting nozzle (S) exchangeably connected to the cutting head (2), wherein the cutting head (2) can be moved along an X-Y plane defined by an X and a Y direction and wherein the cutting head (2) can be moved to a nozzle change magazine (1) disposed relatively to the cutting head (2) by means of a movement unit before the cutting nozzle change, wherein at least one cutting nozzle (S) is disposed in the nozzle change magazine (1), **characterised in that** the nozzle change magazine (1) facilitates direct removal and disposal of a cutting nozzle (S) from the cutting head (2) in a first magazine setting and, in a second magazine setting, the direct insertion of a cutting nozzle (S) in the cutting head (2), and the nozzle change magazine (1) is pivot-mounted around a direction running parallel to the X-Y plane, wherein the cutting head (2) can be held constant in an X-Y position during a nozzle change phase and for direct removal and/or insertion of the cutting nozzle (S) is adjustable in a Z-direction running vertical to this X-Y plane.

2. The device according to claim 1, **characterised in that** the removed cutting nozzle (S) is disposed of by means of a disposal element provided on the nozzle change magazine (1).

3. The device according to one of the claims 1 or 2, **characterised in that** the disposal element is in the form of a disposal opening (ET), preferably a through-hole, provided in the nozzle change magazine (1).

4. The device according to one of the claims 1 to 3, **characterised in that** the nozzle change magazine (1) exhibits at least one circular magazine wheel (4, 5, 6, 7, 8) provided with several retaining holes for insertion of the cutting nozzles (S), wherein several cutting nozzles (S) are disposed in a peripheral direction on the magazine wheel (4, 5, 6, 7, 8).

5. The device according to one of the claims 1 to 4, **characterised in that** several magazine wheels (4, 5, 6, 7, 8) that together form a magazine store are juxtaposed.

6. The device according to one of the claims 1 to 5, **characterised in that** the cutting nozzles (S) are secured with a retaining element, an O-ring for example, to prevent them from falling out of the retaining holes.

7. The device according to one of the claims 1 to 6, **characterised in that** the magazine wheel (4, 5, 6, 7, 8) is disposed on a rotatable drive and/or carrier shaft (9), wherein the magazine wheel (4, 5, 6, 7, 8) can be pushed onto or secured on the drive and/or carrier shaft (9) by means of a clamping and/or locking connection.

8. The device according to claim 7, **characterised in that** the drive and/or carrier shaft (9) and the magazine wheel (4, 5, 6, 7, 8) exhibit at least one fitting notch (11, 12), wherein the fitting notch (11) on the drive and/or carrier shaft corresponds to the fitting notch (12) provided in the magazine wheel (4, 5, 6, 7, 8).

9. The device according to one of the claims 7 or 8, **characterised in that** the drive and/or carrier shaft (9) has at least one through-hole (13), wherein the diameter of the through-hole (13) essentially corresponds to the diameter of the disposal opening (ET) in the magazine wheel (4, 5, 6, 7, 8) and wherein the through-hole (13) is aligned with the disposal opening (ET) in the magazine wheel (4, 5, 6, 7, 8).

10. The device according to one of the claims 1 to 9, **characterised in that** a collecting element (18), preferably a container and/or a drawer or similar, is located close to the disposal opening (ET) in which the disposed cutting nozzle (S) is collected, preferably below the same.

11. The device according to 1, **characterised in that** the nozzle change magazine is in the form of a carrier component, in the nature of a rail or the like, wherein in the carrier component several retaining holes are provided for insertion of the cutting nozzles and at least one disposal opening is provided for disposal of the cutting nozzles.

12. A method of automatically changing cutting nozzles, by means of a device according to one of the claims 1 to 11, with at least one cutting head (2), which has a cutting nozzle (S) exchangeably connected to the cutting head (2), wherein the cutting head (2) can be moved along an X-Y plane defined by an X and a Y direction and wherein the cutting head (2) can be moved to a nozzle change magazine (1) disposed relatively to the cutting head (2) by means of a movement unit before the cutting nozzle change, wherein at least one cutting nozzle (S) is provided in the nozzle change magazine (1), **characterised in that** the nozzle change magazine (1) and the cutting head (2) are moved relative to one another, in such a way that the nozzle change magazine (1) facilitates direct removal and disposal of a cutting nozzle (S) from the cutting head (2) in a first magazine setting and, in a second magazine setting, the direct insertion of a cutting nozzle (S) in the cutting head (2), wherein the X-Y position of the cutting head (2) is kept constant during the nozzle change phase.

13. The method of automatically changing cutting nozzles according to claim 12, charcterised by the following steps:
a) Movement of a cutting head (2) to the nozzle change magazine (1);
b) Positioning of the nozzle change magazine (1) in a first magazine setting;
c) Movement of the cutting head (2) and/or the nozzle change magazine (1) in a Z-direction running vertical to the X-Y plane;
d) Actuation of a locking mechanism with simultaneous detachment/removal and disposal of a used cutting nozzle (S) from the cutting head (2);
e) Movement of the cutting head (2) and/or the nozzle change magazine (1) in the Z-direction;
f) Positioning of the nozzle change magazine (1) in a second magazine setting;
g) Movement of the cutting head (2) and/or the nozzle change magazine (1) in the Z-direction;
h) Inclusion of a new cutting nozzle (S) by the cutting head (2);
i) Continuation of the cutting operation.

14. The method according to one of the claims 12 or 13, **characterised in that** the removal or detachment of the cutting nozzle (S) from the cutting head (2) is supported by a cutting gas impulse on the cutting head (2).

15. The method according to one of the claims 12 to 14, **characterised in that** a locking device, preferably a quick connector, is provided on the cutting head (2), wherein the release and attachment of the cutting nozzle (S) on the cutting head (2) is achieved by actuating the locking mechanism.

16. The method of automatically changing cutting nozzles according to one of the claims 12 to 15, **characterised in that** the nozzle change magazine (1) is returned to the initial setting after each nozzle change.

## Revendications

1. Dispositif pour le remplacement automatique de buses de coupe (S), en particulier pour des buses de coupe d'un dispositif de coupe laser, avec au moins une tête de coupe (2) comportant une buse de coupe (S) reliée de façon remplaçable avec la tête de coupe (2), la tête de coupe (2) étant déplaçable dans un plan X-Y défini par une direction X et par une direction Y, et la tête de coupe (2) étant déplaçable au moyen d'une unité de déplacement, avant le remplacement de la buse de coupe, vers un magasin de remplacement de buse (1) disposé par rapport à la tête de coupe (2), au moins une buse de coupe (S) étant disposée dans le magasin de remplacement de buse (1), **caractérisé en ce que** le magasin de remplacement de buse (1) permet, dans une première position de magasin, un retrait et une évacuation immédiats d'une buse de coupe (S) à partir de la tête de coupe (2) et, dans une deuxième position de magasin, une admission immédiate d'une buse de coupe (S) dans la tête de coupe (2), et le magasin de remplacement de buse (1) est monté de façon rotative autour d'une direction s'étendant parallèlement au plan X-Y, la tête de coupe (2) pouvant être maintenue de façon constante dans une position X-Y pendant une phase de remplacement de buse, et pouvant être déplacé dans une direction Z s'étendant verticalement à ce plan X-Y, pour le retrait et/ou l'admission immédiats de la buse de coupe (S).

2. Dispositif selon la revendication 1, **caractérisé en ce que** l'évacuation de la buse de coupe (S) retirée est effectuée par un élément d'évacuation prévu sur le magasin de remplacement de buse (1).

3. Dispositif selon l'une des revendications 1 ou 2, **caractérisé en ce que** l'élément d'évacuation est formé comme une ouverture d'évacuation (ET) prévue dans le magasin de remplacement de buse (1), de préférence comme un alésage débouchant.

4. Dispositif selon l'une des revendications 1 à 3, **caractérisé en ce que** le magasin de remplacement de buse (1) comporte au moins une roue de magasin (4, 5, 6, 7, 8) circulaire, pourvue d'alésages de maintien pour l'admission des buses de coupe (S), plusieurs buses de coupe (S) étant disposées dans le sens du pourtour sur la roue de magasin (4, 5, 6, 7, 8).

5. Dispositif selon l'une des revendications 1 à 4, **caractérisé en ce que** plusieurs roues de magasin (4, 5, 6, 7, 8) sont disposées les unes à côté des autres, formant ensemble un dépôt de magasin.

6. Dispositif selon l'une des revendications 1 à 5, **caractérisé en ce que** les buses de coupe (S) sont bloquées par un élément de sécurité, par exemple un joint torique, pour éviter leur sortie hors des alésages de maintien.

7. Dispositif selon l'une des revendications 1 à 6, **caractérisé en ce que** la roue de magasin (4, 5, 6, 7, 8) est disposée sur un arbre de support et/ou d'entraînement (9) rotatif, la roue de magasin (4, 5, 6, 7, 8) pouvant être enfoncée ou fixée sur l'arbre de support et/ou d'entraînement (9) au moyen d'un assemblage par serrage et/ou par enclenchement.

8. Dispositif selon la revendication 7, **caractérisé en ce que** l'arbre de support et/ou d'entraînement (9) et la roue de magasin (4, 5, 6, 7, 8) comportent au moins un fraisage porteur (11, 12), le fraisage porteur (11) sur l'arbre de support et/ou d'entraînement correspondant avec le fraisage porteur (12) prévu dans la roue de magasin (4, 5, 6, 7, 8).

9. Dispositif selon l'une des revendications 7 ou 8, **caractérisé en ce que** l'arbre de support et/ou d'entraînement (9) comporte au moins un alésage débouchant (13), le diamètre de l'alésage débouchant (13) correspondant essentiellement au diamètre de 1' ouverture d'évacuation (ET) dans la roue de magasin (4, 5, 6, 7, 8), et l'alésage débouchant (13) étant aligné avec l'ouverture d'évacuation (ET) dans la roue de magasin (4, 5, 6, 7, 8).

10. Dispositif selon l'une des revendications 1 à 9, **caractérisé en ce que** dans la région de l'ouverture d'évacuation (ET), de préférence en-dessous de celle-ci, se trouve un élément collecteur (18), de préférence un récipient et/ou un tiroir ou autre, dans lequel est recueillie la buse de coupe (S) évacuée.

11. Dispositif selon la revendication 1, **caractérisé en ce que** le magasin de remplacement de buse est conçu comme une pièce de support, du genre rail ou autre, plusieurs alésages de maintien étant prévus dans la pièce de support, pour l'admission des buses de coupe, et au moins une ouverture d'évacuation étant prévue pour l'évacuation des buses de coupe.

12. Procédé pour le remplacement automatique de buses de coupe, au moyen d'un dispositif selon l'une des revendications 1 à 11, avec au moins une tête de coupe (2) comportant une buse de coupe (S) reliée de façon remplaçable avec la tête de coupe (2), la tête de coupe (2) étant déplaçable dans un plan X-Y défini par une direction X et par une direction Y, et la tête de coupe (2) étant déplacée, avant le remplacement de la buse de coupe (S), au moyen d'une unité de déplacement, vers un magasin de remplacement de buse (1) disposé par rapport à la tête de coupe (2), au moins une buse de coupe (S) étant mise à disposition dans le magasin de remplacement de buse (1), **caractérisé en ce que** le magasin de remplacement de buse (1) et la tête de coupe (2) sont déplacés l'un par rapport à l'autre, de manière à ce que le magasin de remplacement de buse (1) permet, dans une première position de magasin au cours d'une phase de remplacement de buse, un retrait et une évacuation immédiats d'une buse de coupe (S) hors de la tête de coupe (2) et, dans une deuxième position de magasin, une admission immédiate d'une buse de coupe (S) dans la tête de coupe (2), la position X-Y de la tête de coupe (2) étant maintenue de façon constante pendant la phase de remplacement de buse.

13. Procédé pour le remplacement automatique de buses de coupe selon la revendication 12, **caractérisé par** les étapes suivantes :
a) Déplacement d'une tête de coupe (2) vers le magasin de remplacement de buse (1) ;
b) Positionnement du magasin de remplacement de buse (1) dans une première position de magasin ;
c) Déplacement de la tête de coupe (2) et/ou du magasin de remplacement de buse (1) dans une direction Z s'étendant verticalement au plan X-Y ;
d) Activation d'un dispositif de blocage, simultanément avec un découplage/retrait et une évacuation d'une buse de coupe (S) usagée hors de la tête de coupe (2) ;
e) Déplacement de la tête de coupe (2) et/ou du magasin de remplacement de buse (1) dans la direction Z ;
f) Positionnement du magasin de remplacement de buse (1) dans une deuxième position de magasin ;
g) Déplacement de la tête de coupe (2) et/ou du magasin de remplacement de buse (1) dans la direction Z ;
h) Admission d'une nouvelle buse de coupe (S) par la tête de coupe (2) ;
i) Reprise de l'opération de coupe.

14. Procédé selon l'une des revendications 12 ou 13, **caractérisé en ce que** le retrait ou le découplage de la buse de coupe (S) hors de la tête de coupe (2) est soutenu par une impulsion de gaz de coupe sur la tête de coupe (2).

15. Procédé selon l'une des revendications 12 à 14, **caractérisé en ce qu'**un dispositif de blocage, de préférence un raccord rapide, est mis à disposition sur la tête de coupe (2), le détachement et la fixation de la buse de coupe (S) sur la tête de coupe (2) étant effectués par l'actionnement du dispositif de blocage.

16. Procédé pour le remplacement automatique de buses de coupe selon l'une des revendications 12 à 15, **caractérisé en ce que** le magasin de remplacement de buse (1) est mis dans une position de départ après chaque remplacement de buse effectué.
